# EUROPEAN PATENT SPECIFICATION

(11) **EP 1 286 915 B1**
(45) Date of publication and mention of the grant of the patent: **04.04.2007**
(21) Application number: 01933034.9
(22) Date of filing: 04.05.2001
(51) Int. Cl.: C01B 7/01

(54) **PARTICULATE REMOVAL IN THE REFORMATION OF HALOGENATED ORGANIC MATERIALS**
PARTIKELNENTFERNUNG BEI DER REFORMIERUNG VON HALOGENIERTEN ORGANISCHEN MATERIALIEN
ELIMINATION DE PARTICULES POUR REFORMER DES MATERIAUX ORGANIQUES HALOGENES

(30) Priority: 05.05.2000 US 566177
(43) Date of publication of application: 05.03.2003
(73) Proprietor: THE DOW CHEMICAL COMPANY, Midland, Michigan 48674 (US)
(72) Inventor: SALINAS, Leopoldo, III, Lake Jackson, TX 77566 (US); JEWELL, Dennis W., Angleton, TX 77515 (US)
(74) Representative: Raynor, John
(86) International application number: PCT/US2001/014498
(87) International publication number: WO 2001/085609

(56) References cited:
- EP-A- 0 595 492
- WO-A-99/32397
- US-A- 4 468 376
- US-A- 5 269 235
- PATENT ABSTRACTS OF JAPAN vol. 003, no. 144 (M-082), 28 November 1979 (1979-11-28) & JP 54 121475 A (MITSUBISHI HEAVY IND LTD), 20 September 1979 (1979-09-20)

## Description

The invention relates to the field of the reformation of halogenated materials, and more particularly, to methods for particulate removal from a gasification product in a process for the reformation of halogenated materials.

Related inventions include a prior patent application for a Method and Apparatus for the Production of One or More Useful Products from Lesser Value Halogenated Materials, PCT international application PCT/US/98/26298, published 1 July 1999, international publication number WO 99/32397. The PCT application discloses processes and apparatus for converting a feed that is substantially comprised of halogenated materials, especially byproduct and waste chlorinated hydrocarbons as they are produced from a variety of chemical manufacturing processes, to one or more "higher value products" via a partial oxidation reforming step in a gasification reactor.

Gasification is one technology for converting halogenated materials, typically liquid chlorinated organic by-products and waste streams (RC1's), into useful products. Successful implementation of a gasification technology could replace liquid thermal oxidation facilities, which are a current industry method for treating these waste streams. Gasification offers several advantages to thermal oxidation, including lower economic costs, reduced emissions and a more optimized capture of the chemical value of the feed stream constituents. Gasification is also more flexible than competing halogenated material waste treatment technologies, in that it has a significantly broader range of acceptable feedstock composition.

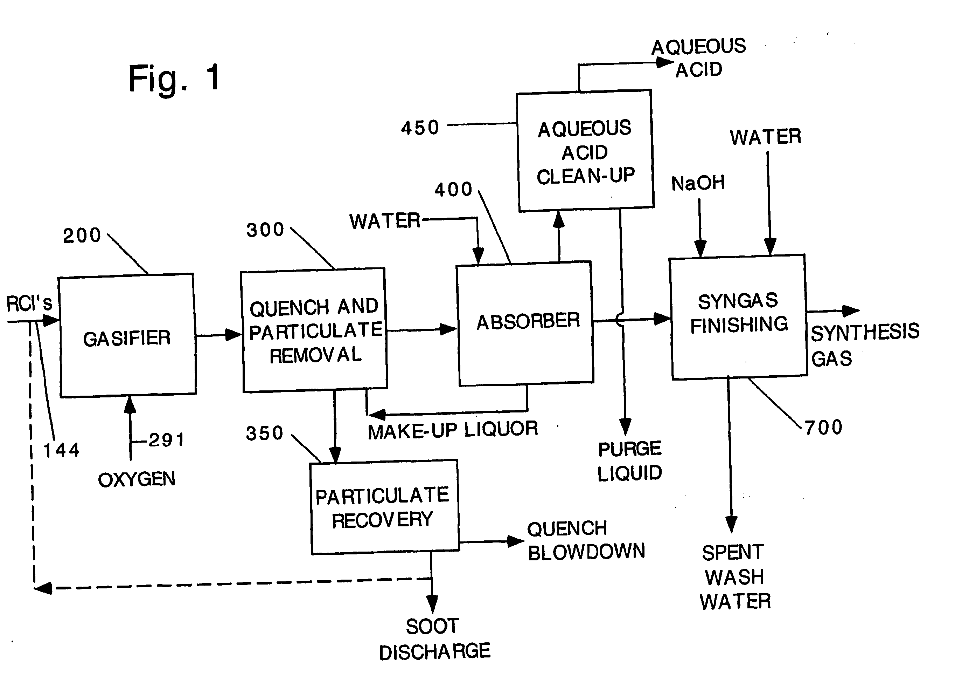

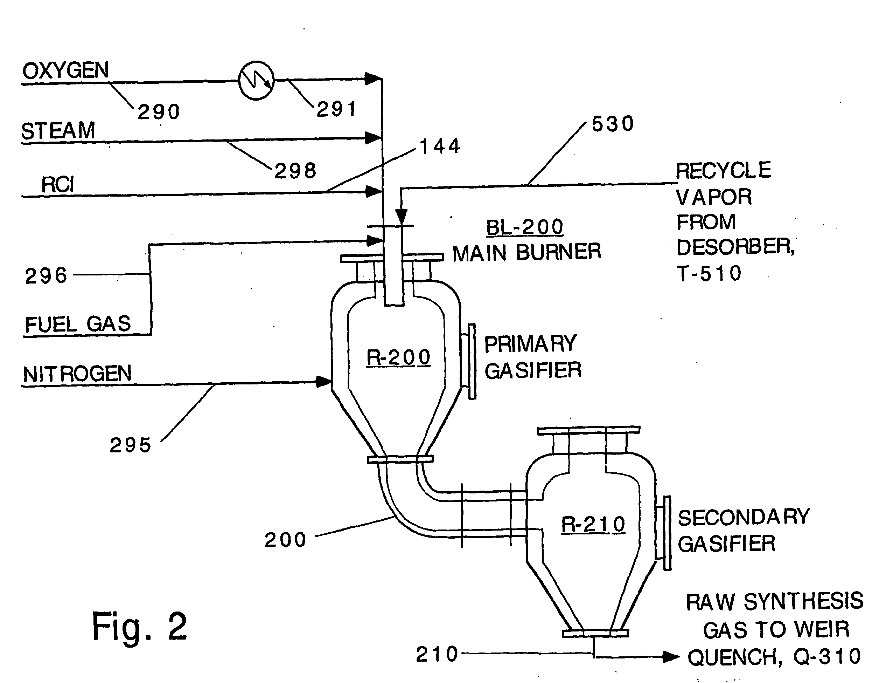

A preferred embodiment for a gasification process, in general, is reviewed below in conjunction with an illustrated block flow diagram, Figure 1, and an illustrated gasifier unit, Figure 2.

Soot removal from aqueous streams is generally not mentioned in the gasification literature. This is likely because typical gasification processes centered around essentially hydrocarbonaceous feedstocks are concerned with making one product (synthesis gas), as opposed to also producing a marketable acid, and consequently clean-up of process water to remove soot is typically not a critical operation unit. In contrast, in the gasification of halogenated or chlorinated feeds, as dealt with herein, where a marketable hydrogen halide acid product is to be produced, efficient soot removal is critical. This invention discloses cost effective and efficient methods for capturing and removing the soot from aqueous streams so as not to contaminate a synthesis gas product and so that a high purity hydrogen halide product can also be produced.

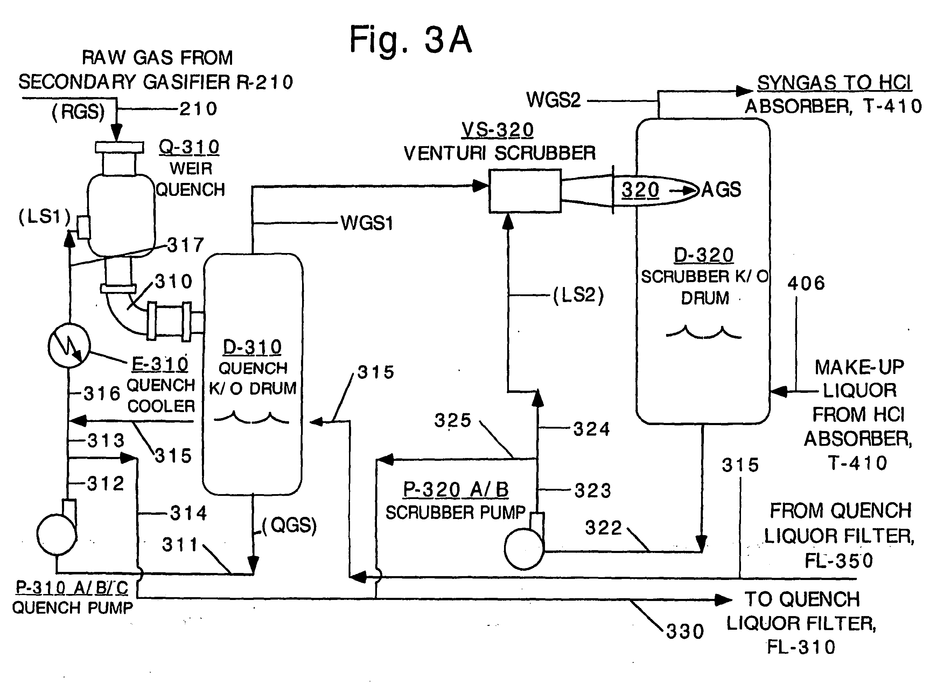

"Gaseous stream", as used herein, refers to gas and/or vapor and/or aerosol, or gas with suspended particles and/or liquid droplets. The instant invention pertains to methods for particulate removal in processes for the reformation of halogenated materials. The methods include mixing a gaseous stream from a reactor (RGS of Figure 3A), the gaseous stream containing hydrogen halides, with a first liquid stream (LS1 of Figure 3A) to form a quenched gaseous stream (QGS of Figure 3A). Preferably, the first liquid stream is an aqueous liquid stream, and more preferably, a recycling stream that includes a solution of hydrogen halides, optionally recycled from a downstream absorber. Preferably, the first liquid stream is a quench liquid used to cool the hot synthesis gases from the reactor.

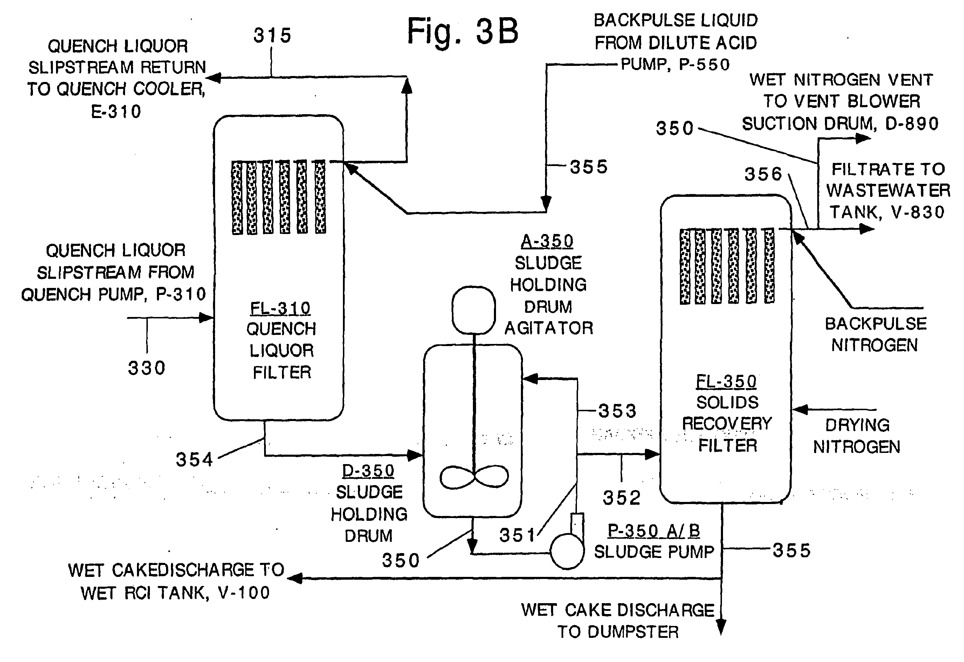

The method includes separating out a first washed gaseous stream (WGS 1 of Figure 3A) containing hydrogen halides from the quenched gaseous stream and separating out at least a portion of a bottoms stream (QGS of Figure 3A) from the quenched gaseous stream and removing solids from the bottoms stream portion in a filter unit (see Figure 3B).

Preferably, the method also includes mixing the first washed gaseous stream WGS1 with a second liquid stream (LS2 of Figure 3A) to form an atomized gaseous stream (AGS of Figure 3A). The second liquid stream LS2 is preferably an aqueous liquid stream, and more preferably, a recycling stream that includes a solution of hydrogen halide, optionally recycled from a downstream absorber. Preferably, the method includes separating out a second washed gaseous stream (WGS2 of Figure 3A) containing hydrogen halides from the atomized gaseous mixture and separating out at least a portion of a bottoms stream from the atomized gaseous stream and removing solids from the bottoms stream portion in a filter unit (Figure 3B).

In preferred designs, the quench mixing of the first liquid stream uses a weir quench associated with a vapor/liquid separator drum, and the second, atomizing gas stream mixing with the second liquid stream includes a wet venturi scrubber associated with a second vapor/liquid separator drum. In preferred designs, portions of bottom streams from the first and second separating steps are combined and flowed to a filter unit. That filter unit preferably includes a primary filter and a secondary filter. Filtrate from the filter unit may be returned for use in the first liquid stream while wet cake is discharged from the filter unit.

A better understanding of the present invention can be obtained when the following detailed description of the preferred embodiment is considered in conjunction with the following drawings, in which:
Figure 1 illustrates in block flow diagram stages of a preferred embodiment for a gasification process for halogenated materials.
Figure 2 illustrates in detail a gasification step and process in a preferred embodiment for the gasification of halogenated materials.
Figures 3A and 3B illustrate a quench and particulate removal process for use in the gasification of halogenated materials.
Figure 4 illustrates an absorber process for use in a process for the gasification of halogenated materials.
A preferred embodiment of a gasification process for halogenated materials, in general, is discussed first, for background purposes. The preferred embodiment of the process is comprised of five major processing areas, illustrated in the block flow diagram of Figure 1.
   1. Gasifier 200
   2. Quench 300
   3. Particulate Removal and Recovery 350
   4. Aqueous HCl Recovery and Clean-up 400, 450
   5. Syngas Finishing 700

Each area will be discussed briefly. A preferred embodiment of a gasification reactor will also be discussed, illustrated in Figure 2. The halogenated materials are assumed to be chlorinated organics in the following embodiment.

Turning now to Figure 1, various liquid chlorinated hydrocarbon feeds (CHCs) are preferably mixed (within reasonable chemical constraints, of course) in a feed tank from which they may be pumped through a preheater to be injected into a gasifier.

The gasifier area 200, as more particularly illustrated in Figure 2 and as further discussed in more detail below, consists of two reaction vessels, R-200 and R-210, and their ancillary equipment for the principal purpose of converting the halogenated material, typically RCl's to synthesis gas and hydrogen halide products. (Halogenated material is referred to herein as RCl's, a typical form.) The RCl's or the like liquid stream 144 is preferably atomized into a primary reactor R-200, preferably with pure oxygen 291 and steam 298. In a harsh gasification environment the RCl or the like components are partially oxidized and converted to synthesis gas (syngas), or to a synthesis gaseous stream, comprised primarily of carbon monoxide, hydrogen chloride and hydrogen, with lesser amounts of water vapor and carbon dioxide and trace amounts of other elements including soot, which is essentially carbon. The syngas preferably flows into a secondary reactor R-210 to allow all reactions to proceed to completion, thus yielding very high conversion efficiencies for all halogenated species and minimizing undesirable side products. Referring back to Figure 1, hot gases from the reactor section 200 are preferably cooled in a quench area 300 by direct contact with a circulating aqueous stream. Quench area 300 and particulate removal area 350 are discussed in detail below.

From quench area 300, particulate free syngas from a vapor/liquid separator scrubber is next preferably introduced to an acid absorption column 400. Noncondensible syngas components should pass through the absorber overheads and on to a syngas finishing area 700. HCl in the syngas from the reforming of RCl feeds is absorbed to a concentrated aqueous acid bottoms stream of about 35 wt percent HCl. This is a high quality aqueous acid stream and is preferably filtered and passed through an adsorption bed 450 to remove final traces of particulates and organics, yielding an aqueous HCl product suitable for sales or internal use.

A caustic scrubber and syngas flare system can make up syngas finishing area 700. The caustic scrubber, or syngas finishing column, uses cell effluent in the lower section of the column to absorb final traces of HCl and Cl2 from the syngas stream. Water can be used in the upper section of the column as a final wash of the product syngas. If the customer is unable to take the syngas, it can be flared to a dedicated flare system. The spent solution from the column bottoms can be disposed of in a suitable wastewater treatment system (not shown). Having reviewed a preferred embodiment of a gasification reactor process for halogenated materials in general, the gasifier area 200 will now be reviewed in more detail, as illustrated in Figures 2. As discussed above, gasifier area 200, in a particularly preferred embodiment, consists of two reaction vessels R-200 and R-210 and their ancillary equipment for the principal purpose of halogenated feed material reformation and conversion to higher value products. For the purpose of the following discussion the halogenated material will be assumed to comprise RC1's, a typical form. The RCl liquid stream is preferably atomized into a primary reactor R-200 with preferably a pure oxygen stream 291 and a steam stream 298 through a main burner or nozzle BL-200.

In the harsh gasification environment the RCl components are partially oxidized and converted to synthesis gas (syngas) comprised primarily of carbon monoxide, hydrogen, hydrogen chloride, and lesser amounts of water vapor and carbon dioxide, as well as trace elements including particulate carbon (or soot). The syngas preferably flows into a secondary reactor R-210 provided to allow all reactions to proceed to completion, thus yielding very high conversion efficiencies for all halogenated species (all RCl's) and minimizing undesirable side products.

Primary gasifier R-200, in the preferred embodiment illustrated, functions as a down fired, jet stirred reactor, the principle purposes of which are to atomize the liquid fuel, evaporate the liquid fuel, and thoroughly mix the fuel with oxygen, a moderator, and hot reaction products. The gasifier operates at approximately 1450°C and 5 bars gauge (barg) (75 psig). These harsh conditions insure near complete conversion or reformation of all RCl or halogenated organic feed components.

The secondary gasifier R-210 in the preferred embodiment functions to allow the reactions initiated in the primary gasifier to proceed to equilibrium. The secondary gasifier R-210 operates at approximately 1400°C and 5 barg (75 psig). This is simply a function of the conditions established in the primary gasifier, less limited heat loss Almost all of the oxygen is consumed in the primary gasifier R-200.

The following represents typical operating performance of the gasifier system with respect to production of species other than the desired CO, H₂, and HCl:
Exit gas CO₂ concentration: 1.0-10.0 volume percent
Exit gas H₂O concentration: 1.0 - 10.0 volume percent
The following example is provided for background.

### Example 1

The following feed streams were fed to the gasifier through an appropriate mixing nozzle:
Chlorinated organic material: 9037 kg/hr
Oxygen (99.5 percent purity): 4419 kg/hr
Recycle vapor or moderator: 4540 kg/hr
[58.8 wt percent water vapor, 41.2 wt percent hydrogen chloride]

The resulting gasification reactions resulted in a synthesis gas stream rich in hydrogen chloride and chamber conditions of approximately 1450°C and pressure of 5 bars, gauge (barg).

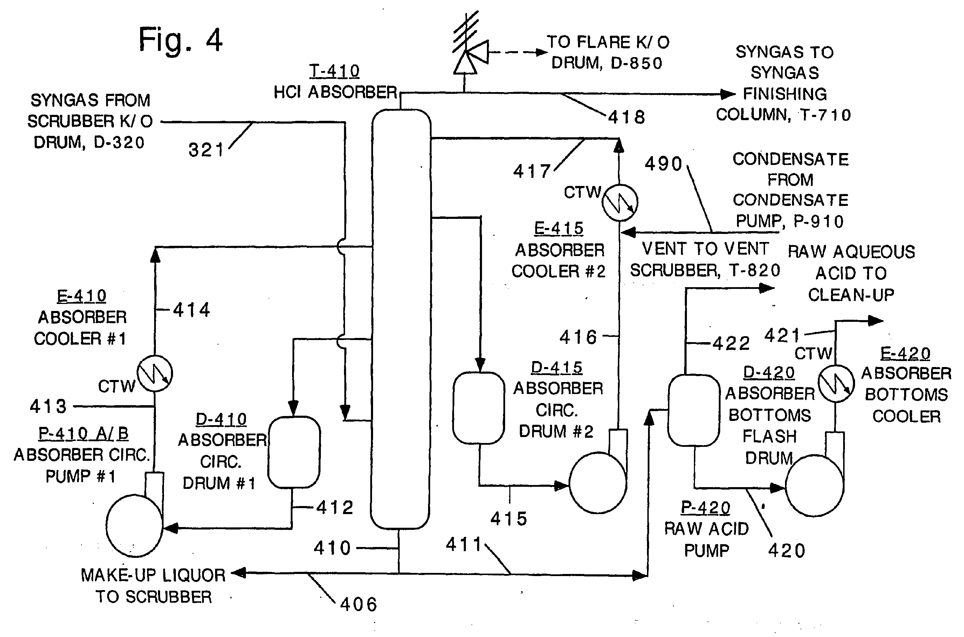

Given the foregoing description of a preferred embodiment of a gasification process in general, including a gasifier and the products of gasification, preferred embodiments of the instant invention are discussed below, having particular reference to Figures 3A, 3B and 4. The halogenated material will be assumed to be chlorinated organics and the hydrogen halides, below, will be assumed to be HCl. As above, the term gaseous stream includes gases and/or vapors and/or aerosols containing particulate material and/or liquid droplets.

A hot gaseous stream 210 (the RGS), as from reactor R-210, is preferably cooled in a quench area 300 by direct contact with a liquid stream 317 (or LSI), preferably a circulating aqueous hydrogen halide or hydrogen chloride stream. The reactor effluent syngas and the aqueous stream are preferably intimately mixed in a weir quench vessel Q-310. The mixture, or quenched gaseous stream, then preferably flows to a vapor/liquid separator D-310, such as a drum, from which a first washed gaseous stream WGS 1 passes overhead. A bottoms liquid stream 311 (the QGS) from the separator D-310 is preferably pumped, as by pump P-310 A/B/C, and cooled, as in cooler E-310, and recycled to the weir quench Q-310 as liquid stream 317.

The first washed gaseous stream WGS1, exiting separator D-310, preferably passes into an atomizer or venturi scrubber VS-320, preferably a wet venturi scrubber. The particulates in the first washed gaseous stream, consisting primarily of soot, are scrubbed from the first washed gaseous stream in the atomizing wet venturi scrubber by means of the entrapment of the particles in liquid droplets. A scrubber liquid stream LS2 is preferably operated in a circulating loop, in that bottoms liquid stream 322 is preferably separated in a subsequent vapor/liquid separator drum D-320 and recycled. A blowdown stream 325 from the scrubber liquid recycle system, see streams 323 and 324, is preferably combined with a slipstream 314 from the quench liquid recycle system, see streams 312 and 313, and flowed to a filter unit, preferably a continuous candle filter particulate recovery unit 350.

In one embodiment of this particulate recovery unit 350, Figure 3B, primary filter FL-310 would remove solids from these process streams 314 and 325 and discharge the solids as a concentrated slurry 354. Preferably, this concentrated slurry stream 354 would be forwarded to a secondary filter FL-350 where the slurry would be filtered and dewatered to a wet cake, which could be discharged as stream 355 to an RCl feed tank for recycling to a gasifier, or to an appropriate disposal system. Alternatively and preferably, the particulate recovery unit 350 can be operated with a single filter unit producing dry cake, as for example in Figure 3B wherein the quench liquor slipstream 330 is fed directly to FL=350.

It has been found that capture of particulates from a gasification process for halogenated materials is accomplished effectively with a gas wash and more particularly with two gas washes, a quench combined with an atomizing scrubber system. It has also been found that the particulate, consisting essentially (or almost entirely) of soot filters effectively with a candle filter system. Importantly, a second washed gaseous stream WGS2 exiting scrubber liquid/vapor separator and feeding an HCl absorption tower, such as T-410 of Figure 4, is essentially free of particulates (only a small cartridge filter system would typically be needed to remove trace particulates for stream WGS2.)

A preferred weir quench design Q-310, illustrated in Figure 3A, which performs the first gas wash, is essentially a short vertical weir cylinder which penetrates a flat plate: Quench liquor flows into an annular volume created between a vessel wall and the cylinder above the flat plate. The liquor continually overflows the top of the cylinder and flows down the wall of the cylinder. Simultaneously hot gases also flow down through the cylinder into the region below. This co-flow of liquid and gas, with liquid evaporating as it cools the gas, creates an intimate mixing and a cooling of the gas stream. An inventory of liquid around the weir can serve as a reservoir in the event of a temporary interruption of liquid flow. In a preferred operating manner, the liquid flow would fully wet the weir ID, creating a full liquid curtain in essence, but would not completely fill the cross-section of the weir. That is, a gas flow area is still available down the weir diameter. In such a manner, the weir quench Q-310 functions as an effective gas wash for removing contaminants due to the inherent gas-liquid contact. Both particulate and other trace gas species are removed to a certain extent, with removal efficiency increasing with an increasing liquid operating rate. Such a weir quench, in particular coupled with a further downstream particulate scrubber VS-320, should remove essentially all aqueous acid soluble impurities from a gas stream, so that aqueous acid produced in a downstream absorber can meet impurities limits of Aqueous HCl Specifications. These impurities in question include primarily NH₃, metals and metal salts.

Captured particulate is effectively removed from a circulating quench liquid stream by means of the above described slipstream filter system inserted between a quench circulating liquid pump P-310 and quench circulating liquid cooler E-310. Flow of stream 314 can be adjusted to maintain a solids concentration in the bulk stream at less than 0.10 weight percent at all times. At an expected maximum soot yield of 0.5 wt. percent yield of RCl to soot, for instance, this requires approximately 75 liters/minute (20 gpm) of slipstream flow. Higher concentrations may increase erosion rates and plugging potential. A preferred filtration operation itself is covered in more detail below.

Particulates remaining in a first washed gaseous stream WGS1 from the above quench system, the particulates consisting primarily of soot, are further effectively scrubbed from the gas stream in atomizing scrubber VS-320, preferably a wet venturi scrubber, as discussed above. The atomizing scrubbing system typically would operate at 90-110°C and at syngas system operating pressure (which might nominally be 4.8 bars, gauge (70 psig)). Normal vapor load or flow is I actual cubic meter/second (2100 actual cubic feet per minute under operating conditions) requiring approximately 1875 liters/minute (500 gpm) aqueous scrubbing liquid (being preferably 30-35 wt. percent HCl). Pressure drop across the atomizer would typically be 0.7 bars (10 psi). Solids concentration in the circulating scrubber liquor would be about 0.5 wt. percent. Final particulate removal from a syngas stream is preferably accomplished with such a venturi scrubber VS-320. Efficient particulate removal is desired to prevent downstream equipment plugging problems and to meet syngas particulate specifications. The venturi technology is one of the more efficient technologies for removing very fine solids from a vapor stream. The high energy expended through a venturi improves the capture efficiency for particles of all sizes compared to other wet scrubbing devices. Pressure drop through a venturi would preferably be approximately 10.0 psi. The particles penetrate and are trapped in liquid droplets through the fluid acceleration and deceleration created by the venturi. Pressure drop is optimized to maximize atomization and velocity differentials for particle capture. Pressure drop is, however, limited below the point where atomization of the liquid becomes too fine, creating droplets which are too small to practically separate in the scrubber vapor/liquid separator.

Preferably, a three phase mixture from the venturi VS-320 would be discharged tangentially into a vapor/liquid separation drum D-320. This tangential entry can create a cyclonic effect, the centrifugal force of which forces the liquid droplets (with captured solids) to the walls where they coalesce and gravity drain to the bottom. A radial vane demister followed by a chevron vane demister in the upper half of the separator drum (not shown) may be used to achieve greatest liquid droplet removal from the gas stream. An essentially particle-free gas stream WGS2, thus, may flow on to an HCl absorption system 400.

Bottom liquid stream 322 from a scrubber vapor/liquid separator, which is actually a very dilute slurry, can be pumped by pump P-320, directly back to the inlet of the venturi scrubber VS-320. Preferably approximately 80 percent of the scrub liquid stream LS2 is atomized directly into the center of the venturi throat via a pressure atomization nozzle. The remaining liquid is preferably introduced via several tangential nozzles to create a swirling film of liquid which wets the walls of the venturi into the throat. For effective scrubbing efficiency, liquid to gas ratios are preferably maintained at or near 0.25 gallons of scrub liquor per actual cubic foot of gas. Due to the vigorous gas-liquid contact in the venturi, this scrub liquid should be very near equilibrium with the gas phase. That is, the scrub liquid is typically 30-32 wt. percent HCl at base design conditions. Makeup liquor for the system can be supplied from an absorber bottoms stream 406 from an absorber system 400, which should be at a high enough HCl concentration to avoid absorbing HCl from the gas, rather letting it pass through to where it can be captured as saleable acid in the absorber.

A continuous blowdown stream 325 to filter unit 350 for particulate recovery controls the solids concentration in an atomizing liquid recirculating loop. Solids concentration may operate best at approximately 0.5 wt. percent, and preferably at no greater than 1.0 wt. percent solids. This blowdown to a filter unit also serves to control the aqueous chemistry of an atomizing liquid recirculating loop, helping to limit salt and metal concentrations to acceptable levels.

Scrubber liquid stream LS2 preferably operates in a circulating loop, and as discussed above, a blowdown stream 325 from this scrubber liquid recycling system is combined with the slipstream 314 from the quench recycling liquid system and both flow to filter unit 350, preferably the continuous candle filter unit. Normal flow to the primary filter FL-310 might be approximately 750 liters/miunute (200 gpm) at 100° C and 0.10 wt. percent solids. Primary filter FL-310 removes solids from the process streams and discharges them as concentrated slurry stream 354 which is forwarded to a secondary filter FL-350 where it is filtered and dewatered to a wet cake 355, which can then be discharged to an RCl feed tank for recycle to a gasifier, or to packs for transport to a site kiln, or to a landfill for disposal. The primary filter FL-310 functions similarly to a conventional baghouse, only in liquid service.

The primary filter FL-310 is preferably comprised of a pressure vessel containing multiple filter elements. Several candle/sock type filter elements make up a cluster. The clusters are herded together external to the vessel and valved so they can be individually isolated and backpulsed. Forward element flow is from OD to ID. Solids cake is collected on the OD of the element, and is periodically backpulsed where it settles to the bottom cone of the vessel. Clusters are pulsed sequentially such that the filter remains in service as a continuous operation. The backpulse fluid can be dilute acid from a dilute acid pump. Filtrate 315 can flow to an environmental area for collection and disposal, or to the quench cooler E-310.

Solids which settle to the bottom of a primary filter vessel can be periodically discharged as a concentrated slurry stream 354 at 2 percent wt. to a sludge holding drum D-350. This tank is agitated to maintain the solids in complete suspension. This sludge is then preferably pumped to a secondary filter FL-350.

The secondary filter FL-350 is of a similar design to the primary filter FL-310, but operates in a different mode. The slurry again flows from OD to ID of the elements, with cake collecting on the OD. Upon a timed interval, or maximum differential pressure, slurry flow is shut off and the vessel is allowed to drain free of liquid. Nitrogen flow is then forwarded through the filter to blow free liquid out and partially dry the cake. The elements are then backpulsed with nitrogen to dislodge cake, which falls through a bottom filter cone and into a wet RCl tank. Tank agitation mixes and suspends the particulate in the RCl liquid and can be fed back to the gasifier where it can be gasified. The cake would be approximately 50 percent wt. moisture.

## Claims

1. A method for particulate removal in the reformation of halogenated materials, comprising:
mixing a synthesis gaseous stream containing hydrogen halides from a reactor with a first liquid stream to form a quenched gaseous stream;
separating a first washed gaseous stream containing hydrogen halides from the quenched gaseous stream;
separating at least a portion of a bottoms liquid stream from the quenched gaseous stream; and
removing solids from the quenched bottoms liquid stream portion in a filter unit.

2. The method of claim 1 wherein the mixing includes significantly cooling hot synthesis gases by quenching.

3. The method of claim 2 wherein the cooling includes mixing hot gases and an aqueous liquid stream in a weir quench unit.

4. The method of claim 1 that includes recycling at least a portion of the quenched bottoms stream into the first liquid stream.

5. The method of claim 1 that include utilizing an aqueous solution of hydrogen halide in the first liquid stream.

6. The method of claim 1 that includes flowing the quenched gaseous stream into a first vapor/liquid separator drum.

7. The method of claim 1 that includes
flowing the quench gaseous stream into a first vapor/liquid separator drum;
recycling a bottoms liquid stream from the first separator drum to the first liquid stream; and
flowing a portion of the recycling quenched bottoms stream to the filter unit.

8. The method of claim 1 that includes recycling at least a portion of a filtrate from the filter unit into the first liquid stream.

9. The method of claim 1 wherein separating the first washed gaseous stream includes separating an overhead stream.

10. The method of claim 1 further comprising the steps of:
mixing the first washed gaseous stream with a second liquid stream to form an atomized gaseous stream;
separating a second washed gaseous stream containing hydrogen halides from the atomized gaseous stream;
separating at least a portion of a scrubbed liquid bottoms stream from the atomized gaseous stream; and
removing solids from the scrubbed liquid bottoms stream portion of the atomized gaseous stream in the filter unit.

11. The method of claim 10 wherein the atomized gaseous stream is formed in a scrubber.

12. The method of claim 11 wherein the scrubber is a wet venturi scrubber.

13. The method of claim 10 wherein the separating of a second washed gaseous stream includes separating in a second vapor/liquid separator drum.

14. The method of claim 10 that includes recycling at least a portion of the scrubbed bottoms stream from the atomized gaseous stream to the second liquid stream.

15. The method of claim 10 that includes flowing the second washed gaseous stream to an acid absorber.

16. The method of claim 12 wherein the atomized gaseous stream is discharged tangentially from the scrubber into a second vapor/liquid separator drum.

17. The method of claim 10 that includes utilizing an aqueous solution of hydrogen halide in the second liquid stream.

18. The method of claims 1 or 10 further comprising creating a concentrated slurry of particles in at least one filter unit and dewatering at least a portion of the concentrated slurry to form a wet cake of particulates.

19. The method of claims 1 or 10 further comprising discharging a wet cake of particulates from at least one filter unit.

20. The method of claim 18 further comprising at least one of the steps of:
recycling the wet cake to a reactor for halogenated materials, incinerating the cake in a kiln, and burying the cake in a landfill.

21. The method of claims 1 or 10 wherein at least one filter unit includes at least a first filter and a second filter.

22. The method of claim 18 further comprising recycling at least a portion of the concentrated slurry to a reactor for halogenated materials.

23. The method of claims 1 or 10 wherein solids from bottoms streams are removed into a concentrated slurry.

24. The method of claim 10 wherein the bottoms stream portions from the quenched gaseous stream and from the atomized gaseous stream flowed to the same filter unit.

25. The method of claim 1 wherein the mixing and separating a first washed gaseous stream is carried out at a temperature above approximately 90°C and at a pressure above approximately 4 bars, gauge.

26. The method of claim 10 wherein the forming of the atomized gaseous stream and the separating of the second washed gaseous stream is carried out at a temperature above approximately 80°C and at a pressure above approximately 3.5 bars, gauge.

## Patentansprüche

1. Ein Verfahren zur Partikeleritfernung bel der Umbildung halogenierter Materialien, umfassend:
Mischen eines Synthesegasstroms, der Halogenwasserstoffe enthält, aus einem Reaktor mit einem ersten Flüssigkeitsstrom, um einen gequenchten Gasstrom zu bilden;
Abtrennen eines ersten gewaschenen Gasstroms, der Halogenwasserstoffe enthält, von dem gequenchten Gasstrom;
Abtrennen wenigstens eines Teils eines Bodenproduktflüssigkeitsstroms aus dem gequenchten Gasstrom und
Entfernen von Feststoffen aus dem Teil des gequenchten Bodenproduktflüssigkeitsstroms in einer Filtereinheit.

2. Das Verfahren nach Anspruch 1, wobei das Mischen ein signifikantes Kühlen der helßen Synthesegase durch Quenchen umfasst.

3. Das Verfahren nach Anspruch 2, wobei das Kühlen das Mischen heißer Gase und eines wässrigen Flüsslgkeltsstroms in einer Überlaufquencheinheit umfasst.

4. Das Verfahren nach Anspruch 1, welches das Wiedereinbringen wenigstens eines Teils des gequenchten Bodsnproduktstroms In den ersten Fioaslgkeitsstrom umfasst.

5. Das Verfahren nach Anspruch 1, welches das Verwenden einer wässrigen Lösung von Halogenwasserstoff In dem ersten Flüssigkeltsstrom umfasst.

6. Das Verfahren nach Anspruch 1, welches das Strömenlassen des gequenchten Gasstroms in eine erste Dampf/Flüssigkeits-Scheidetrommel umfasst.

7. Das Verfahren nach Anspruch 1, welches umfasst:
Strömenlassen des gequenchten Gasstroms in eine erste Dampft/Flüssigkeits-Scheidetrommel;
Wiedereinführen eines Bodenproduktflüssigkeitsstroms aus der ersten Scheidetrommel in den ersten Flüssigkeitsstrom und Strömenlassen eines Teils des wiedereingeführten gequenchten Bodenprodukstroms in die Filtereinheit.

8. Das Verfahren nach Anspruch 1, welches das Wieldereinführen wenigstens eines Teils eines Filtrats aus der Filtereinheit in den ersten Flüssigkeitsstrom umfasst.

9. Das Verfahren nach Anspruch 1, wobei das Abtrennen des ersten gewaschenen Gasstroms das Abtrennen eines Kopfproduktstroms einschließt.

10. Das Verfahren nach Anspruch 1, außerdem umfassend die Schritte:
Mischen des ersten gewaschenen Gasstroms mit einem zweiten Flüssigkeitsstrom, um einen zerstäubten Gasstrom zu bilden;
Abtrennen eines zweiten gewaschenen Gasstroms, der Halogenwasserstoffe enthält, von dem zerstäubten Gasstrom;
Abtrennen wenigstens eines Teils eines gereinigten flüssigen Bodenproduktstroms von dem zerstäubten Gasstrom und Entfernen von Feststoffen aus dem Teil des gereinigten flüssigen Bodenproduktstroms des zerstäubten Gasstroms in der Filtereinheit.

11. Das Verfahren nach Anspruch 10, wobei der zerstäubte Gasstrom in einem Gaswäscher gebildet wird.

12. Das Verfahren nach Anspruch 11, wobei der Gaswäscher ein Venturi-Nasswäscher ist.

13. Das Verfahren nach Anspruch 10, wobei das Abtrennen eines zweiten gewaschenen Gasstroms des Abtrennen in einer zweiten Dampf/Flüssigkeits-Scheldetrommel umfasst.

14. Das Verfahren nach Anspruch 10, welches das Wiedereinführen von wenigstens einem Tell des gereinigten Bodenproduktstroms aus dem zerstäubten Gasstrom in den zweiten Flüssigkeitsstrom umfasst.

15. Das Verfahren nach Anspruch 10, welches das Strömenlassen des zweiten gewaschenen Gasstroms zu einem Säureabsorber umfasst.

16. Das Verfahren nach Anspruch 12, wobei der zerstäubte Gasstrom tangential aus dem Gaswäscher In eine zweite Dampf/Flüssigkeite-Scheidetrommel entladen wird.

17. Das Verfahren nach Anspruch 10, welches das Verwenden einer wässrigen Lösung von Halogenwasserstoff in dem zweiten Flüssigkeitsstrom umfasst.

18. Das Verfahren nach Anspruch 1 oder Anspruch 10, außerdem umfassend das Bilden einer konzentrierten Aufschlämmung von Partikeln in wenigstens einer Filtereinheit und Entwässern wenigstens eines Teils der konzentrierten Aufschlämmung, um einen feuchten Partikelkuchen zu bilden.

19. Das Verfahren nach Anspruch 1 oder Anspruch 10, außerdem umfassend das Entnehmen eines feuchten Partikelkuchens aus wenigstens einer Filtereinheit.

20. Das Verfahren nach Anspruch 18, außerdem umfassend wenigstens einen der Schritte:
Wiedereinführen des feuchten Kuchens in einen Reaktor für halogenierte Materialien, Verbrennen des Kuchens in einem Brennofen und Vergraben des Kuchens in einer Mülldeponie.

21. Das Verfahren nach Anspruch 1 oder Anspruch 10, wobei wenigstens eine Filtereinheit wenigstens einen ersten Filter und einen zweiten Filter umfasst.

22. Das Verfahren nach Anspruch 18, außerdem umfassend das Wiedereinführen wenigstens eines Teils der konzentrierten Aufschlämmung in einen Reaktor für halogenierte Materialien.

23. Das Verfahren nach Anspruch 1 oder Anspruch 10, wobei die Feststoffe aus den Bodenproduktströmen in eine konzentrierte Aufschlämmung hinein entfernt werden.

24. Das Verfahren nach Anspruch 10, wobei die Anteile des Bodenproduktstroms aus dem gequenchten Casstrom und aus dem zerstäubten Gasstrom zu derselben Filtereinhelt gespült werden.

25. Das Verfahren nach Anspruch 1, wobei das Mischen und Trennen eines ersten gewaschenen Gasstroms bei einer Temperatur oberhalb von ungefähr 90°C und einem Druck oberhalb von ungefähr 4 bar Überdruck durchgeführt werden.

26. Das Verfahren nach Anspruch 10, wobei das Bilden des zerstäubten Gasstroms und das Abtrennen des zweiten gewaschenen Gasstroms bei einer Temperatur oberhalb von ungefähr 80°C und einem Druck oberhalb von ungefähr 3,5 bar Überdruck durchgeführt werden.

## Revendications

1. Procédé de séparation de particules, dans le reformage de produits halogénés, lequel procédé comporte les opérations suivantes :
- mélanger un courant gazeux de synthèse contenant des halogénures d'hydrogène, issu d'un réacteur, avec un premier courant liquide, pour en faire un courant gazeux brutalement refroidi,
- séparer de ce courant gazeux brutalement refroidi un premier courant gazeux lavé contenant des halogénures d'hydrogène,
- séparer du courant gazeux brutalement refroidi au moins une partie de courant liquide de queues,
- et séparer des solides d'avec cette partie de courant liquide de queues brutalement refroidi, dans une unité de filtration.

2. Procédé conforme à la revendication 1, dans lequel l'opération de mélange comporte un refroidissement significatif et brutal des gaz de synthèse chauds.

3. Procédé conforme à la revendication 2, dans lequel le refroidissement comporte le fait de mélanger des gaz chauds et un courant liquide aqueux dans une unité de refroidissement brutal à déversoir.

4. Procédé conforme à la revendication 1, qui comporte le fait de recycler au moins une partie du courant de queues brutalement refroidi dans le premier courant liquide.

5. Procédé conforme à la revendication 1, qui comporte le fait d'employer une solution aqueuse d'halogénure d'hydrogène dans le premier courant liquide.

6. Procédé conforme à la revendication 1, qui comporte le fait d'envoyer le courant gazeux brutalement refroidi dans un premier tambour de séparation vapeur/liquide.

7. Procédé conforme à la revendication 1, qui comporte :
- le fait d'envoyer le courant gazeux brutalement refroidi dans un premier tambour de séparation vapeur/liquide,
- le fait de recycler un courant liquide de queues issu de ce premier tambour séparateur dans le premier courant liquide,
- et le fait d'envoyer dans l'unité de filtration une partie du courant de queues brutalement refroidi et recyclé.

8. Procédé conforme à la revendication 1, qui comporte le fait de recycler au moins une partie du filtrat issu de l'unité de filtration dans le premier courant liquide.

9. Procédé conforme à la revendication 1, dans lequel la séparation du premier courant gazeux lavé comporte la séparation d'un courant de têtes.

10. Procédé conforme à la revendication 1, qui comporte en outre les étapes suivantes :
- mélanger le premier courant gazeux lavé avec un deuxième courant liquide, pour en faire un courant gazeux atomisé,
- séparer de ce courant gazeux atomisé un deuxième courant gazeux lavé contenant des halogénures d'hydrogène,
- séparer du courant gazeux atomisé au moins une partie d'un courant liquide de queues épuré,
- et séparer des solides d'avec cette partie de courant liquide de queues épuré, séparée du courant gazeux atomisé, dans une unité de filtration.

11. Procédé conforme à la revendication 10, dans lequel le courant gazeux atomisé est formé dans un épurateur.

12. Procédé conforme à la revendication 11, dans lequel l'épurateur est un laveur à venturi.

13. Procédé conforme à la revendication 10, dans lequel la séparation du deuxième courant gazeux lavé comporte une séparation effectuée dans un deuxième tambour de séparation vapeur/liquide.

14. Procédé conforme à la revendication 10, qui comporte le fait de recycler au moins une partie du courant de queues épuré, séparé du courant gazeux atomisé, dans le deuxième courant liquide.

15. Procédé conforme à la revendication 10, qui comporte le fait d'envoyer le deuxième courant gazeux lavé dans un absorbeur d'acide.

16. Procédé conforme à la revendication 12, dans lequel le courant gazeux atomisé est évacué tangentiellement de l'épurateur pour entrer dans un deuxième tambour de séparation vapeur/liquide.

17. Procédé conforme à la revendication 10, qui comporte le fait d'employer une solution aqueuse d'halogénure d'hydrogène dans le deuxième courant liquide.

18. Procédé conforme à la revendication 1 ou 10, qui comporte en outre le fait de former une suspension concentrée de particules dans au moins une unité de filtration, et le fait de déshydrater au moins une partie de cette suspension concentrée pour en faire un gâteau humide de particules.

19. Procédé conforme à la revendication 1 ou 10, qui comporte en outre le fait d'évacuer un gâteau humide de particules d'au moins une unité de filtration.

20. Procédé conforme à la revendication 18, qui comporte en outre au moins l'une des étapes suivantes : recycler le gâteau humide dans un réacteur de traitement de matières halogénées, incinérer le gâteau dans un four, et enterrer le gâteau dans une décharge.

21. Procédé conforme à la revendication 1 ou 10, dans lequel il y a au moins une unité de filtration qui comporte au moins un premier filtre et un deuxième filtre.

22. Procédé conforme à la revendication 18, qui comporte en outre le fait de recycler au moins une partie de la suspension concentrée dans un réacteur de traitement de matières halogénées.

23. Procédé conforme à la revendication 1 ou 10, dans lequel les solides séparés des courants de queues sont évacués sous forme de suspension concentrée.

24. Procédé conforme à la revendication 10, dans lequel les parties de courant de queues séparées du courant gazeux brutalement refroidi et du courant gazeux atomisé sont envoyées dans la même unité de filtration.

25. Procédé conforme à la revendication 1, dans lequel les opérations de mélange et de séparation d'un premier courant gazeux lavé sont effectuées à une température supérieure à environ 90 °C et sous une pression manométrique supérieure à environ 4 bars.

26. Procédé conforme à la revendication 10, dans lequel les opérations de formation du courant gazeux atomisé et de séparation du deuxième courant gazeux lavé sont effectuées à une température supérieure à environ 80 °C et sous une pression manométrique supérieure à environ 3,5 bars.
